## Europäisches Patentamt
## European Patent Office
## Office européen des brevets

(19)

(11) Veröffentlichungsnummer : **0 071 785**
B1

(12)

# EUROPÄISCHE PATENTSCHRIFT

(45) Veröffentlichungstag der Patentschrift :
01.10.86

(21) Anmeldenummer : 82106322.9

(22) Anmeldetag : 15.07.82

(51) Int. Cl.⁴ : **C 08 L 35/06, C 08 L 71/04**

(54) **Thermoplastische Formmasse.**

(30) Priorität : 04.08.81 DE 3130811

(43) Veröffentlichungstag der Anmeldung :
16.02.83 Patentblatt 83/07

(45) Bekanntmachung des Hinweises auf die Patenterteilung : 01.10.86 Patentblatt 86/40

(84) Benannte Vertragsstaaten :
BE DE FR GB NL

(56) Entgegenhaltungen :
DE-A- 2 524 787
DE-A- 2 843 450
Die Akte enthält technische Angaben, die nach dem Eingang der Anmeldung eingereicht wurden und die nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Hambrecht, Juergen, Dr.
Werderstrasse 30
D-6900 Heidelberg (DE)
Erfinder : McKee, Graham Edmund, Dr.
Kastanienweg 8
D-6940 Weinheim (DE)
Erfinder : Brandstetter, Franz, Dr.
Ritterbuechel 45
D-6730 Neustadt (DE)
Erfinder : Echte, Adolf, Dr.
Leuschnerstrasse 42
D-6700 Ludwigshafen (DE)
Erfinder : Priebe, Edmund, Dr.
Bensheimer Ring 7A
D-6710 Frankenthal (DE)

EP 0 071 785 B1

0 071 785

## Beschreibung

Die Erfindung betrifft eine thermoplastische Formmasse auf der Grundlage von schlagfest modifizierten Styrol-Maleinsäureanhydrid-Copolymerisaten und Polyphenylenethern.

Zum Stand der Technik nennen wir :

(1) US-PS 3 383 435
(2) DE-OS 27 13 430
(3) DE-OS 27 13 455

In (1) werden Zusammensetzungen von Polyphenylenethern und Styrolharzen beschrieben.

Die Styrolharze können sowohl mit Kautschuk, zumeist Polybutadien, modifiziert sein, es kann aber auch reines Polystyrol eingesetzt werden. Die Hitzebeständigkeit, Chemikalienbeständigkeit und die mechanischen Eigenschaften dieser Mischungen genügen häufig jedoch nicht den Anforderungen.

Ersetzt man die Styrolharze in (1) durch Styrol-Maleinsäureanhydrid-Copolymerisate (S-MSA), wie sie in (2) beschrieben werden, so kann die Wärmeformbeständigkeit und Chemikalienbeständigkeit der Abmischungen verbessert werden. Die mechanischen Eigenschaften der Blends sind jedoch auch bei Einsatz Kautschuk-modifizierter S-MSA-Copolymerisate unbefriedigend. In (3) werden deshalb Mischungen aus Kautschuk-modifizierten S-MSA-Copolymerisaten, Polyphenylenether und Styrol-Butadien-Blockcopolymeren beschrieben, in denen die mechanischen Eigenschaften, insbesondere die Zähigkeit, durch Zugabe der Blockcopolymeren angehoben werden. Diese Verbesserung ist jedoch für viele Anwendungsbereiche nicht ausreichend und zudem mit dem Nachteil verbunden, daß die Ausgewogenheit zwischen Zähigkeit und Steifigkeit der Formmassen gestört wird.

Der vorliegenden Erfindung lag daher die Aufgabe zugrunde, thermoplastische Formmassen auf der Grundlage von schlagfest modifizierten Styrol-Maleinsäureanhydrid-Copolymerisaten und Polyphenylenethern zu schaffen, die wesentlich verbesserte mechanische Eigenschaften bei hoher Wärmeformbeständigkeit und guter Verarbeitbarkeit aufweisen.

Die Lösung dieser Aufgabe gelingt durch die in Patentanspruch 1 genannten Maßnahmen.

Nachstehend werden die Komponenten I der erfindungsgemäßen Formmasse, deren Herstellung und die Herstellung der Formmasse beschrieben.

### Komponente I

Die Komponente I der erfindungsgemäßen Formmasse stellt mindestens ein schlagfest modifiziertes S-MSA-Copolymerisat dar, das seinerseits mindestens aus einem Copolymerisat A und mindestens einem Pfropfmischpolymerisat B aufgebaut ist.

Die Komponente I ist in einem Anteil von 5-95 Gew.-%, vorzugsweise von 20-80 Gew.-%, jeweils bezogen auf I und II, in der erfindungsgemäßen Formmasse vorhanden.

Nachstehend wird der Aufbau der Bestandteile A und B der Komponente I beschrieben.

### Bestandteil A

Der Bestandteil A der Komponente I wird durch kontinuierliche Mischpolymerisation der Monomeren $a_1$), $a_2$) und gegebenenfalls $a_3$) bei hohen Temperaturen unter starkem Rühren hergestellt. Die Monomeren $a_1$) und $a_2$) werden kontinuierlich in ein Polymerisationsgefäß eingebracht und gleichzeitig wird eine diesen Mengen entsprechende Menge des Polymerisationsgemisches aus dem Gefäß abgezogen (vgl. A.W. Hanson, R.L. Zimmermann, Industrial Eng. Chemistry 49, (1957) Seite 803). Der Bestandteil A ist verantwortlich für die gute Wärmeformbeständigkeit der Komponente I der erfindungsgemäßen Formmasse und ist in einem Anteil von 50 bis 95 Gew.-%, bevorzugt 60 bis 90 Gew.-%, jeweils bezogen auf die Komponente I, vorhanden.

Als monovinylaromatische Monomere $a_1$) kommen Styrol, α-Methylstyrol oder kernalkylierte Styrole mit bis zu 12 Kohlenstoffatomen in Frage. Als Monomeres $a_2$) wird Maleinsäureanhydrid angewendet und als Monomere vom Typ $a_3$) sind vor allem Acrylnitril und (Meth)acrylsäureester von $C_1$ bis $C_8$-Alkanolen am Aufbau beteiligt. Zum Aufbau des Bestandteils A der Komponente I werden 75 bis 92 Gew.-Teile des monovinylaromatischen Monomeren angewendet. Vom Monomeren $a_2$) werden 8 bis 25 Gew.-Teile verwendet. Das Monomere $a_3$) ist nur gegebenenfalls in der Formmasse enthalten ; falls es angewendet wird, kommen Mengen von 2 bis 15 Gew.-Teile, insbesondere Mengen von 5 bis 12 Gew.-Teile, in Betracht.

### Bestandteil B

· Bestandteil B der Komponente I ist ein Pfropfmischpolymerisat, das in einem Anteil von 5 bis 50 Gew.-%, insbesondere von 10 bis 40 Gew.-%, jeweils bezogen auf die Komponente I, angewendet wird. Dieses Pfropfmischpolymerisat ist aufgebaut aus 10 bis 50 Gew.-Teilen, vorzugsweise 15 bis 45 Gew.-

2

Teilen eines Gemisches aus mindestens einem vinylaromatischen Monomeren b₂), das bis zu 12 Kohlenstoffatome enthält, und 5 bis 25 Gew.-Teilen, vorzugsweise 5 bis 20 Gew.-Teilen mindestens eines (Meth)acrylsäureesters und/oder von Acrylnitril b₃) als Pfropfhülle, auf 50 bis 90 Gew.-Teile, insbesondere 60 bis 80 Gew.-Teile einer elastomeren Pfropfgrundlage (Kautschukkomponente) b₁).

Die Herstellung Pfropfmischpolymerisate B ist an sich bekannt. Sie können z. B. hergestellt werden durch Polymerisation eines Gemisches von Styrol und Acrylnitril oder (Meth)acrylaten in Gegenwart eines Kautschuks.

Der Kautschuk b₁) soll eine Glastemperatur (nach K.H. Illers und H. Breuer, Kolloid-Zeitschrift 176, (1961) Seite 110) haben, die unter 0 °C liegt. Als Kautschuk kommen beispielsweise in Frage : Polybutadien (vgl. DE-OS 1 420 775 und DE-OS 1 495 089). Copolymerisate aus Butadien und Styrol (vgl. Brit. Patent 649 166), Copolymerisate aus Butadien und Styrol, Polyacrylester, die gegebenenfalls vernetzt sein können (vgl. DE-AS 1 138 921, DE-AS 1 224 486 oder DE-AS 1 260 135), sowie Copolymerisate aus Acrylsäureester und Butadien (vgl. DE-AS 1 238 207), ferner Elastomer von Copolymerisaten aus Acrylsäureestern mit Styrol, Acrylnitril und Vinylethern und Copolymerisate aus Ethylen und einem nicht konjugierten Dien (EPDM-Kautschuke).

Die vinylaromatischen Pfropfmonomeren b₂) sind Styrol, α-Methylstyrol und/oder kernalkylierte Styrole mit bis zu 12 C-Atomen ; als Monomere b₃) kommen (Meth)acrylsäureester von Alkanolen mit bis zu 8 C-Atomen, sowie Acrylnitril oder Mischungen davon in Betracht.

Die Pfropfcopolymerisation kann dabei bekannterweise in Lösung, Suspension oder vorzugsweise in Emulsion erfolgen. Die Weichphase des Pfropfmischpolymerisats weist, bei der bevorzugten Herstellung des Kautschuks und der Pfropfung in Emulsion einen mittleren Teilchendurchmesser (d₅₀-Wert der integralen Masseverteilung) von > 0,08 μm auf. In der Regel liegt der d₅₀-Wert im Bereich von 0,1 bis 0,4 μm. Die Schlagzähigkeit der Komponente I der Formmasse ist weitgehend vom Teilchendurchmesser der Weichphase unabhängig. Bei solchen Pfropfcopolymerisationen erfolgt eine zumindest teilweise chemische Verknüpfung der polymerisierenden Monomeren mit dem bereits polymerisierten Kautschuk, wobei die Verknüpfung wahrscheinlich an den im Kautschuk enthaltenen Doppelbindungen erfolgt. Zumindest ein Teil der Monomeren ist also auf den Kautschuk gepfropft. Der Teil der Monomeren, der nicht auf den Kautschuk gepfropft ist, copolymerisiert für sich. Dieses Copolymerisat kann bei den hier in Rede stehenden Gemischen der Komponente B zugerechnet werden. Man kann den Anteil der gepfropften Monomeren dadurch ermitteln, daß man den Gelgehalt der Pfropfcopolymeren bestimmt : Das Pfropfcopolymerisat wird in einem Lösungsmittel, z. B. in Methyl-Ethyl-Keton gelöst ; dabei lösen sich nur die nichtgepfropften, für sich allein copolymerisierten Monomeren. Der Bestandteil B ist für die Schlagzähigkeit der Komponente I der erfindungsgemäßen Formmasse verantwortlich.

Wesentlich für das Eintreten des Erfolges ist nunmehr, daß die Bestandteile A und B der Komponente I der erfindungsgemäßen Formmasse derart aufgebaut und in der Mischung so aufeinander abgestimmt sind, daß der Absolutbetrag der Differenz der Gewichtsteile, der in der Hartmatrix enthaltenen Monomeren a₂) und gegebenenfalls a₃), und der im Pfropfmischpolymerisat enthaltenen Monomeren b₃) 4 oder kleiner als 4 ist ; mathematisch ausgedrückt

$$| (a_2 + a_3) - (b_3) | \leqq 4$$

Herstellung der Komponente I aus den Bestandteilen A + B

Die Komponente I der erfindungsgemäßen Formmasse wird vorzugsweise durch Abmischen einer Schmelze der Bestandteile A und B erhalten. Dabei werden die Bestandteile A und B als Schmelzen bei Temperaturen zwischen 200 und 260 °C auf Extrudern, Walzen oder Knetern bei Verweilzeiten von einigen Minuten gemischt. Man kann aber auch Lösungen des Bestandteils A und des Pfropfmischpolymerisates B vermischen und die Lösungsmittel anschließend entgasen.

Komponente II

Die Komponente II der erfindungsgemäßen Formmasse stellt mindestens ein aus einem Polyphenylenether (PPO) aufgebautes Harz dar, das in Mengen von 95-5 Gew.-%, vorzugsweise 80-20 Gew.-%, jeweils bezogen auf I + II, vorhanden ist.

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff, Wasserstoff, Halogen, Kohlenwasserstoffreste, Halogenkohlenwasserstoffe, Phenylreste und Kohlenwasserstoff-oxi-Reste tragen. So kommen in Frage : Poly(2,6-dichlor-1,4-phenylen)-ether, Poly(2,6-diphenyl-1,4-phenylen)-ether, Poly(2,6-dimethoxy-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt werden Poly-(2,6-dimethyl-1,4-phenylen) ether mit einer Grenzviskosität zwischen 0,45 und 0,65 dl/g (gemessen in Chloroform bei 30 °C).

Die Polyphenylenether können in bekannter Weise z. B. in Gegenwart von komplexbildenden Mitteln wie Kupferbromid und sek. Dibutylamin, aus den Phenolen hergestellt werden.

**0 071 785**

Komponente III

Zusätzlich ·zu den Komponenten I und II kann die erfindungsgemäße Formmasse gegebenenfalls übliche Zusatzstoffe in wirksamen Mengen enthalten. Als solche Zusatzstoffe seien genannt :

Pigmente, Farbstoffe, Füllstoffe, Flammschutzmittel, weitere verträgliche Polymere, Antistatika, Antioxidantien und Schmiermittel.

Herstellung der erfindungsgemäßen Formmasse aus den Komponenten :

Die Herstellung der erfindungsgemäßen Formmasse kann aus den Schmelzen der Komponenten I und II, wie nachstehend beschrieben, erfolgen. Bevorzugt wird jedoch die Herstellung aus den Bestandteilen A, B und Komponente II und gegebenenfalls III, nämlich durch Mischen der Weich- und Hartkomponente (der Komponente I) und der Polyphenylenether in der Schmelze. Üblicherweise erfolgt die Herstellung auf Vorrichtungen, die ein homogenes Mischen zulassen, wie Knetern, Extrudern oder Walzenmischgeräten.

Die Herstellung der erfindungsgemäßen Formmasse kann aber auch durch intensives Durchmischen von Lösungen der einzelnen Komponenten und anschließendes Eindampfen des Lösungsgemisches hergestellt werden. Auch kombinierte Lösungs- und Schmelzmischprozesse, z. B. auf Entgasungsextrudern, sind erfolgreich erprobt worden.

Für die Herstellung der erfindungsgemäßen Formmassen wurden die in Tabelle 1 aufgeführten Copolymerisate $A_1$ bis $A_3$ und die in der Tabelle 2 genannten Pfropfkautschuke $B_1$ bis $B_6$ verwendet. Zusammensetzung und weitere Eigenschaften sind in den genannten Tabellen angegeben.

Als Komponente II wurde ein Handelsprodukt auf Basis eines Poly-(2,6-dimethyl-1,4-phenylen)ethers verwendet, das eine Grenzviskosität von 0,5 [dl/g] aufwies und das in Tabelle 3 mit C bezeichnet wird.

(Siehe Tabellen Seite 5 ff.)

4

Tabelle 1

Bestandteil $A_n$ der Komponente I

| Bezeich-nung | Typ des Copolymeri-sates[+] | Zusammensetzung in Teilen | | | Gew.-Teile $a_2 + a_3$ | Schlagzähig-keit $[kJ/m^2]$ | Kerbschlag zähigkeit $[kJ/m^2]$ | Vicat $^oC$ |
|---|---|---|---|---|---|---|---|---|
| | | S | MSA | AN | | | | |
| $A_1$ | S–MSA | 92 | 8 | – | 8 | 11,7 | 0,7 | 115 |
| $A_2$ | S–MSA | 87 | 13 | – | 13 | 13,8 | 0,8 | 128 |
| $A_3$ | S–MSA–AN | 75 | 10 | 15 | 25 | 13,5 | 0,9 | 128 |

S = Styrol
MSA = Maleinsäureanhydrid
AN = Acrylnitril
[+]alle Copolymerisate haben eine Viskositätszahl
VZ von 70 [ml/g] (0,5 %ig in Dimethylformamid)

0 071 785

Pfropfmischpolymerisate $B_n$

| Bezeich-nung | Zusammensetzung des Kautschuks % | | Zusammensetzung des Pfropfreises % | | Kautschuk/Pfropfreis % | $T_g$ °C | Gew.-Teile $(b_3)$ |
|---|---|---|---|---|---|---|---|
| | Bu | BA | S | AN | | | |
| $B_1$ | 100 | – | 100 | – | 75 | –81 | 0 |
| $B_2$ | 100 | – | 92 | 8 | 75 | –80 | 8 |
| $B_3$ | 100 | – | 88 | 12 | 75 | –78 | 12 |
| $B_4$ | 100 | – | 82 | 18 | 75 | –81 | 18 |
| $B_5$ | 100 | – | 75 | 25 | 75 | –78 | 25 |
| $B_6$ | – | 100 | 88 | 12 | 75 | –44 | 12 |

Bu = Butadien
BA = Butylacrylat
S = Styrol
AN = Acrylnitril

Die in den Versuchen und Vergleichsversuchen genannten Parameter wurden wie folgt bestimmt :

1. Die Schlagzähigkeit und Kerbschlagzähigkeit in (kJ/m$^2$) wurde nach DIN 53453 an spritzgegossenen Normkleinstäben bei einer Massetemperatur von 250 °C gemessen.

2. a) Die Viskositätszahlen, VZ, in (ml/g) wurden an einer 0,5 %igen Lösung in Dimethylformamid bestimmt.

b) Grenzviskosität $\eta$ in [dl] wurde in CHCl$_3$ bei 30 °C gemessen.

3. Der Vicat-Erweichungspunkt in °C wurde nach DIN 53460, Verfahren B, in Silikonöl bestimmt.

4. Der mittlere Teilchendurchmesser (d$_{50}$-Wert der integralen Masseverteilung) wurde durch Auswertung von Elmi-Aufnahmen bestimmt.

5. Die Tg-Werte der Kautschuke wurden nach K.H. Illers und H. Breuer, Kolloid-Zeitschrift, loc. cit. bestimmt.

Die Erfindung wird nachstehend anhand von Beispielen und einem Vergleichsversuch näher erläutert, wobei sich die genannten Teile und Prozente, sofern nichts anderes vermerkt ist, auf das Gewicht beziehen.

### Beispiele 1 bis 6, Versuche 1 + 2

Die in der Tabelle 3 genannten Komponenten A$_n$ und B$_n$ und C wurden in einem Fluidmischer vorgemischt und anschließend auf einem Kokneter bei etwa 220 bis 230 °C unter Stickstoff innig verknetet. Die Verweilzeit betrug etwa 4 Minuten. Das dabei erhaltene Granulat wurde auf einer Einwellen-Extruder-Schnecke aufgeschmolzen und zu gleichmäßigem, für die Spritzgußverarbeitung geeigneten Granulat abgeschlagen. In Tabelle 3 sind die Eigenschaften der Mischungen aufgeführt.

### Vergleichsversuch

Ein durch kontinuierliche Polymerisation erhaltenes schlagzähes S-MSA-Copolymerisat (Dylark® 240, Arco Chem. Corp.) mit 8 % MSA und 12 % Kautschuk wurde gemäß Beispiel 7 der DT-OS 27 13 455 mit 10 Teilen eines ABA-Blockmischpolymerisats (Shell Kraton® X 4119) und 10 Teilen eines Polyphenylenethers mit der Grenzviskosität von 0,5 [dl/g], abgemischt.

### Tabelle 3

| Beispiel | Zusammen-setzung | Kerbschlag-zähigkeit [kJ/m$^2$] | Vicat [°C] | $\lvert (a_2+a_3)-b_3 \rvert$ |
|---|---|---|---|---|
| 1 | 76 A$_1$<br>14 B$_2$<br>10 C | 8,5 | 120 | 0 |
| 2 | 76 A$_1$<br>14 B$_3$<br>10 C | 7,2 | 119 | 4 |
| 3 | 67 A$_1$<br>13 B$_2$<br>20 C | 10,3 | 128 | 0 |
| 4 | 76 A$_2$<br>14 B$_3$<br>10 C | 9,7 | 129 | 1 |
| 5 | 76 A$_2$<br>14 B$_6$<br>10 C | 9,4 | 127 | 1 |

0 071 785

(Fortsetzung)

| Beispiel | Zusammensetzung | Kerbschlagzähigkeit $[kJ/m^2]$ | Vicat $[^{\circ}C]$ | $\left\|(a_2+a_3)-b_3\right\|$ |
|---|---|---|---|---|
| 6 | 76 $A_3$<br>14 $B_5$<br>10 C | 10,2 | 129 | 0 |
| Versuch 1 | 76 $A_1$<br>14 $B_1$<br>10 C | 2,8<br>– | 119 | 8 |
| Versuch 2 | 76 $A_1$<br>14 $B_4$<br>10 C | 4,8 | 119 | 10 |
| Vergleichsversuch | s.Beschr. | 5,6 | 116 | – |

**Patentansprüche**

1. Thermoplastische Formmasse, enthaltend ein Gemisch aus
I 5 bis 95 Gew.% mindestens eines schlagfest modifizierten Styrol-Maleinsäureanhydrid-Copolymerisates und
II 95 bis 5 Gew.% mindestens eines Polyphenylenethers
gegebenenfalls enthaltend
III übliche Zusatzstoffe in wirksamen Mengen,
dadurch gekennzeichnet, daß das schlagfest modifizierte Styrol-Maleinsäureanhydrid-Copolymerisat I ein Gemisch aus zwei Bestandteilen A und B enthält, nämlich
50 bis 95 Gew.% eines Copolymerisates A, bezogen auf A + B, aufgebaut aus :
$a_1$) 75 bis 92 Gewichtsteilen Styrol und/oder kernalkylierten Styrolen mit bis zu 12 Kohlenstoffatomen
$a_2$) 25 bis 8 Gewichtsteilen Maleinsäureanhydrid,
gegebenenfalls enthaltend
$a_3$) 2 bis 15 Gewichtsteilen eines acrylisch ungesättigten Monomeren,
und
5 bis 50 Gew.%, bezogen auf A + B, eines Pfropfmischpolymerisates B
aufgebaut aus :
$b_1$) 50 bis 90 Gewichtsteilen mindestens eines Kautschuks, der eine Glastemperatur, Tg; von unterhalb 0 °C aufweist,
$b_2$) 10 bis 50 Gewichtsteilen Styrol und/oder kernalkylierten Styrolen mit bis zu 12 Kohlenstoffatomen
und
$b_3$) 5 bis 25 Gewichtsteilen mindestens eines (Meth)-acrylsäureesters von Alkanolen mit bis zu 8 Kohlenstoffatomen und/oder Acrylnitril,
wobei der Absolutbetrag der Differenz der Gewichtsteile von [$a_2$) und $a_3$)] und [$b_3$)] 4 oder weniger als 4 beträgt.
2. Verfahren zur Herstellung von Formmassen gemäß Anspruch 1 durch Vereinigen der Schmelze der Komponente I mit der Schmelze der Komponente II.
3. Verwendung der Formmassen gemäß Anspruch 1 zur Herstellung von Formteilen.
4. Formteile aus Formmassen gemäß Anspruch 1.

**Claims**

1. A thermoplastic moulding composition containing a mixture of

8

I 5 to 95 % by weight of at least one styrene/maleic anhydride copolymer which has been modified to make it impact-resistant, and .

II 95 to 5 % by weight of at least one polyphenylene ether,

with or without

III conventional additives in effective amounts,

wherein the said impact-resistant styrene/maleic anhydride copolymer I contains a mixture of two components A and B, namely

50 to 95 % by weight, based on A + B, of a copolymer A composed of

$a_1$) 75 to 92 parts by weight of styrene and/or nuclearly alkylated styrenes of up to 12 carbon atoms, and

$a_2$) 25 to 8 parts by weight of maleic anhydride,

with or without

$a_3$) 2 to 15 parts by weight of an acrylic monomer,

and

5 to 50 % by weight, based on A + B, of a graft copolymer B composed of

$b_1$) 50 to 90 parts by weight of at least one rubber having a glass transition temperature, TgG, of less than 0 °C,

$b_2$) 10 to 50 parts by weight of styrene and/or nuclearly alkylated styrenes of up to 12 carbon atoms, and

$b_3$) 5 to 25 parts by weight of at least one ester of acrylic or methacrylic acid with an alkanol of up to 8 carbon atoms and/or acrylonitrile,

the absolute amount of the difference between the parts by weight of [$a_2$) and $a_3$)] and [$b_3$)] being 4 or less than 4.

2. A process for the production of a moulding composition as claimed in claim 1 by combining the melt of component I with the melt of component II.

3. The use of a moulding composition as claimed in claim 1 for the production of moulded parts.

4. Moulded parts produced from a moulding composition as claimed in claim 1.


**Revendications**

1. Matière à mouler thermoplastique, comprenant un mélange de

I 5 à 95 % en poids d'au moins un copolymère du styrène et de l'anhydride maléique, modifié pour le rendre résistant aux chocs, et

II 95 à 5 % en poids d'au moins un poly(éther de phénylène)

et contenant éventuellement

III des additifs usuels en des proportions efficaces,

caractérisée en ce que le copolymère I du styrène et de l'anhydride maléique, modifié pour le rendre résistant aux chocs, contient un mélange de deux composantes A et B, à savoir

50 à 95 % en poids par rapport à A + B d'un copolymère A, formé de

$a_1$) 75 à 92 parties en poids de styrène et(ou) de styrènes alkylés sur le noyau, comprenant jusqu'à douze atomes de carbone, et

$a_2$) 25 à 8 parties en poids d'anhydride maléique,

ainsi qu'éventuellement

$a_3$) 2 à 15 parties en poids d'un monomère à insaturation acrylique, et

5 à 50 % en poids par rapport à A + B d'un copolymère de greffage B, formé de

$b_1$) 50 à 90 parties en poids d'au moins un caoutchouc avec une température de transition vitreuse $T_g$ inférieure à 0 °C,

$b_2$) 10 à 50 parties en poids de styrène et(ou) de styrènes alkylés sur le noyau, comprenant jusqu'à douze atomes de carbone, et

$b_3$) 5 à 25 parties en poids d'au moins un ester de l'acide (méth)acrylique et d'alcanols en $C_1$ à $C_8$ et(ou) de nitrile acrylique,

avec la condition que la valeur absolue de la différence entre les parties en poids de $a_2$) et $a_3$) et de $b_3$) soit égale ou inférieure à 4.

2. Procédé de préparation de matières à mouler suivant la revendication 1 par la réunion de la composante I à l'état fondu avec la composante II à l'état fondu.

3. Utilisation de matières à mouler suivant la revendication 1 pour la production d'articles moulés.

4. Articles moulés, produits à partir de matières à mouler selon la revendication 1.